# EUROPÄISCHE PATENTSCHRIFT

(11) **EP 2 467 014 B1**
(45) Veröffentlichungstag und Bekanntmachung des Hinweises auf die Patenterteilung: **06.09.2017**
(21) Anmeldenummer: 10751778.1
(22) Anmeldetag: 23.07.2010
(51) Int. Cl.: A01K 87/06, A01K 89/00

(54) **ANGEL**
FISHING ROD AND REEL ASSEMBLY
CANNE ET MOULINET DE PÊCHE

(30) Priorität: 17.08.2009 DE 102009037508; 23.02.2010 DE 102010009139
(43) Veröffentlichungstag der Anmeldung: 27.06.2012
(73) Patentinhaber: Triller, Wolfgang, 84152 Mengkofen (DE)
(72) Erfinder: Triller, Wolfgang, 84152 Mengkofen (DE)
(74) Vertreter: advotec.
(86) Internationale Anmeldenummer: PCT/DE2010/000862
(87) Internationale Veröffentlichungsnummer: WO 2011/020452

(56) Entgegenhaltungen:
- DE-A1- 19 701 236
- FR-A- 958 287
- JP-U- 56 037 875
- US-A- 2 191 004
- US-A1- 2006 101 703

## Beschreibung

Die vorliegende Erfindung betrifft eine Angel mit einer Angelrute und einer Angelrolle mit einem Fuß, der zur Befestigung der Angelrolle an der Angelrute dient.

Derartige Angeln sind aus dem Stand der Technik bekannt. Die bekannten Befestigungen von Angelrollen an Angelruten bestehen meist aus Schraubmechanismen, starren Verbindungen oder Hülsenverbindungen mit vorgegebenen Winkeln, die speziell bei größeren Rollen sehr schwer ausgelegt sind. Auch ein schneller Spulenwechsel ist bei den bekannten Befestigungsarten von Angelrollen an Angeln nur relativ langsam und umständlich möglich. Bei den aus dem Stand der Technik bekannten Angeln ist mit der Anbringung des Fußes an der Angelrute die Position der Angelrolle zur Rute unveränderbar festgelegt. Dies führt zu einer erschwerten Handhabung und ferner zu Nachteilen beim Ablauf der Angelschnur von der Wickelspule und dem Durchlauf der Angelschnur durch den nächstliegenden Führungsring der Angelrute.

JP 56 037875 U beschreibt eine Angel mit einer Angelrute und einer Angelrolle mit einem Fuß, der zur Befestigung der Angelrolle an der Angelrute dient. Sowohl der Fuß der Angelrolle als auch die Angelrute weisen jeweils mindestens eine Aussparung zur gemeinsamen Aufnahme mindestens eines lösbaren Befestigungsmittels zur Fixierung der Angelrolle an der Angelrute auf. Derartige Angeln sind auch aus den Druckschriften US 2 191 004 A sowie FR 958 287 A.

Der Nachteil der in den genannten Druckschriften beschriebenen Angeln besteht darin, dass ein Wechseln der Angelrolle bzw. eine Positionsveränderung der Angelrolle an der Angelrute aufwendig und zeitintensiv ist. Der vorliegenden Erfindung liegt die Aufgabe zugrunde, eine Angel zur Verfügung zu stellen, welche die Nachteile der Angeln aus dem Stand der Technik überwindet. Insbesondere liegt der vorliegenden Erfindung die Aufgabe zugrunde, eine Angel mit möglichst wenig Gewicht zur Verfügung zu stellen, bei der ein schnelles Wechseln der Angelrolle und/oder der Spule möglich ist und ggf. auch eine Verstellung der Winkeligkeit der Angelrolle zur Angelrute möglich ist.

Diese Aufgabe wird gelöst durch eine Angel mit den Merkmalen des Anspruch 1. Durch die Anordnung von Aussparungen in der Angelrute sowie im Fuß der Angelrolle zur gemeinsamen Aufnahme eines lösbaren Befestigungsmittels wird erreicht, dass die Angelrolle schnell und unkompliziert an der Rute befestigt bzw. von dieser gelöst werden kann. Zudem wird durch die erfindungsgemäße Befestigung der Angelrolle an der Angelrute eine deutliche Gewichtsreduzierung erzielt.

In der Regel ist der Fuß mit der Angelrolle starr verbunden. Die Angelrolle bzw. deren Gehäuse und der dazugehörige Fuß können miteinander einstückig sein.

Das mindestens eine Befestigungsmittel ist ein Federstift. Mit derartigen Befestigungsmitteln ist eine besonders einfache Konstruktion und ein besonders schnelles und einfaches Wechseln der Angelrolle möglich. Das genannte Befestigungsmittel greift in eine oder mehrere Aussparungen des Fußes (z. B. Nuten, Rillen, Bohrungen etc.) ein und fixieren den Fuß auf diese Art und Weise an bzw. in der Angelrute. Erfindungsgemäß umfasst der Fuß der Angelrolle eine in Längsrichtung der Angelrute angeordnete Befestigungsplatte mit mindestens einer Aussparung. Eine derartige Befestigungsplatte kann in idealer Weise in einer Aussparung der Angelrute fixiert werden (siehe unten).

Bei einer bevorzugten Ausführungsform der erfindungsgemäßen Angel ist die Winkellage der Längsachse der Angelrolle und deren Wickelspule zur Längsrichtung (Längsachse) der Angelrute veränderbar, wobei diese beiden Längsachsen in der gleichen Ebene verlaufen, wobei das lösbare Befestigungsmittel zur Fixierung der gewünschten Winkellage dient. Dadurch wird dem Angler die Möglichkeit gegeben, die Lage der Angelrolle relativ zur Angelrute schnell und einfach anzupassen.

Vorzugsweise ist der Fuß der Angelrolle um eine an der Angelrolle angeordnete Achse schwenkbar angelenkt, wobei die Achse senkrecht zur Längsrichtung des Fußes (bzw. der Angelrute) verläuft und ein Schwenken der Angelrolle in Richtung zur Angelrute hin oder davon weg erlaubt. Durch diese Schwenkbewegung der Angelrolle kommt die Winkelspule näher zur Angelrute hin bzw. weiter davon weg. Somit ist die vorgenannte Winkellage so einstellbar, dass die Längsachse der Wickelspule der Angelrolle in ihrer Verlängerung auf den Mittelpunkt des nächsten Schnurführungsringes der Angelrute zeigt. Dies ergibt den Vorteil, dass die von der Wickelspule ablaufende Angelschnur beim Abwerfen, d. h. in der Wurfphase am Schnurführungsring im kleinsten erreichbaren Umlenkungswinkel zur Weiterführung der Angelschnur entlang der Angelrute hat. Außerdem wird damit die Angelschnur in vorteilhafter Weise von der Wickelspule symmetrisch zur Richtung deren Längsachse abgezogen, wodurch Ungleichmäßigkeiten beim Abzug der Angelschnur vermieden werden. Dadurch ergibt sich beim Durchlaufen der Schnur durch den Schnurführungsring dort der niedrigst mögliche Reibungswert, wodurch beim Auswerfen des Köders optimale Wurfweiten erreicht werden.

Durch die beschriebenen bevorzugten Ausführungsformen mit verstellbarer Winkellage ist der Abstand der Angelrolle von der Angelrute veränderbar und in der jeweiligen Lage feststellbar. Dies ergibt mehrere Vorteile. So kann sich der Angler denjenigen Abstand der Rolle von der Rute wählen, der es entsprechend der Größe seiner Hand ihm optimal ermöglicht, mit dem Zeigefinger entweder den Rand der Wickelspule oder die Schnur selbst zu erfassen. Außerdem kann man damit den Abstand und die Lage der Angelrolle zum ersten Schnurführungsring der Rute ändern und hierdurch dazu beitragen, dass die ablaufende Angelschnur den optimalen Winkel zur Längsachse der Angelrolle und zur Längsachse der Angelrute hat. Die Befestigungsplatte des Fußes weist mehrere, übereinander angeordnete Aussparungen auf. Die Aussparungen können auch ineinander übergehen bzw. miteinander verbunden sein. Durch die Mehrzahl derartiger Aussparungen ist es auf einfache Art und Weise möglich, eine Winkelverstellung, wie sie oben dargelegt ist, zu erreichen. Eine derartige Winkelverstellung kann auch über Zahn- oder Wellenbohrungen bzw. konische Arretierungsbolzen im Rollenfuß schnell und einfach erreicht werden.

Mit Vorteil weist die Angelrute eine weitere, vorzugsweise durchgehende Aussparung zur Durchführung von Teilen des Fußes, insbesondere der Befestigungsplatte des Fußes auf, die vorzugsweise um 90° versetzt zur Aussparung zur Aufnahme des lösbaren Befestigungsmittels angeordnet ist. Auf diese Art und Weise kann beispielsweise die Befestigungsplatte des Fußes innerhalb der Angelrute fixiert werden. Mit Vorteil ist in der genannten Aussparung auch die oben genannte Achse, die senkrecht zur Längsrichtung des Fußes bzw. der Angelrute verläuft, angeordnet, und dient beispielsweise einem hakenförmigen Abschnitt des Fußes der Angelrolle als formschlüssiges Widerlager, wodurch eine Schwenkbewegung des Fußes und damit der Angelrolle ermöglicht wird (siehe auch die Figurenbeschreibung).

Vorzugsweise ist die Angelrute im Bereich der oben genannten Aussparung verstärkt, insbesondere verdickt ausgebildet. Dies trägt zur Stabilisierung der Angelrute im Bereich der Aussparungen bei.

Weitere Merkmale der Erfindung ergeben sich aus der nachfolgenden Beschreibung von bevorzugten Ausführungsformen der Erfindung in Verbindung mit den Zeichnungen und den Unteransprüchen. Hierbei können die einzelnen Merkmale jeweils für sich allein oder in Kombination miteinander verwirklicht sein.

In den Zeichnungen zeigen:
- Figur 1:: eine erfindungsgemäße Angel;
- Figur 2a, b:: schematische Darstellungen der Angel von Fig. 1 mit unterschiedlich verschwenkten Angelrollen;
- Figur 3:: eine weitere Ausführungsform einer erfindungsgemäßen Angel.

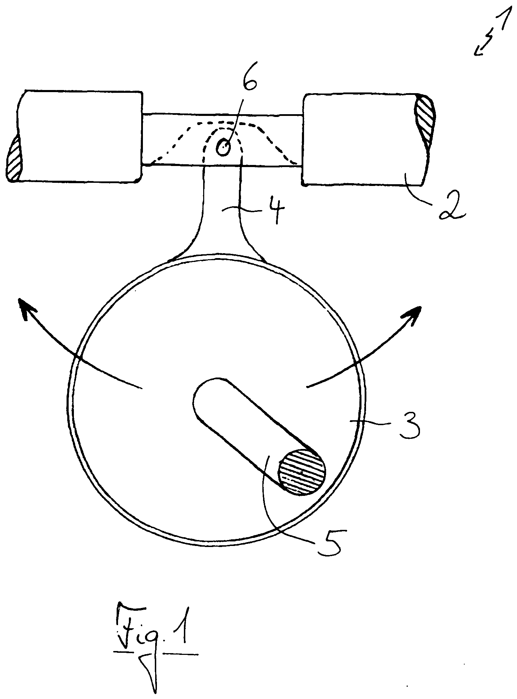

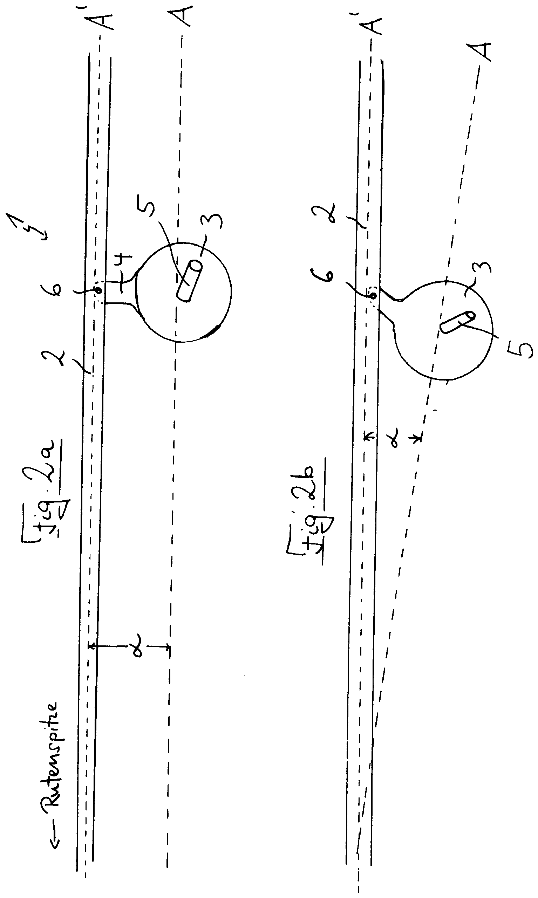

Figur 1 zeigt eine erfindungsgemäße Angel 1 mit einer Angelrute 2 und einer Angelrolle 3. Bei der Angel 1 handelt es sich um eine solche für das Fliegenfischen. Die Angelrolle 3 weist ferner einen Fuß 4 zur Befestigung der Angelrolle 3 an der Angelrute 2 auf. Die Angelrolle 3 weist ferner einen Griff 5 zur Betätigung der Angelrolle 3 auf.
Sowohl der Fuß 4 der Angelrolle 3 als auch die Angelrute 2 weisen jeweils eine Aussparung zur gemeinsamen Aufnahme eines lösbaren Befestigungsmittels (hier ein Befestigungsstift 6) zur Fixierung der Angelrolle 3 an der Angelrute 2 auf. Durch einfaches Lösen des Befestigungsstiftes 6, welcher beispielsweise ein Federstift oder Druckstift ist, kann die Angelrolle 3 schnell und einfach von der Angelrute 2 entfernt bzw. an diese montiert werden. Nach einem Lockern oder Entfernen des Befestigungsstiftes 6 kann die Angelrolle 3 nach vorne in Richtung der Spitze der Angelrute oder nach hinten in Richtung des Endes der Angelrute verschwenkt und in dieser Position fixiert werden (siehe hier insbesondere Figuren 2a und 2b). Der Befestigungsstift könnte auch eine Schraube sein.

Die Figuren 2a und 2b zeigen schematische Darstellungen der Angel 1. Bei der Angel 1 kann die Winkellage α der Längsachse A der Angelrolle und deren Wickelspule zur Längsachse A' der Angelrute 2 verändert werden, wobei diese beiden Längsachsen A, A' in der gleichen Ebene verlaufen. Der Befestigungsstift 6 dient zur Fixierung der gewünschten Winkellage. Figur 2a zeigt eine Stellung der Angelrolle 3, bei der die Längsachse A der Angelrolle 3 parallel zur Längsachse A' der Angelrute verläuft.

Figur 2b zeigt die Angel 1 nachdem die Angelrolle 3 nach vorne in Richtung der Angelspitze verschwenkt und in dieser Stellung fixiert wurde. Die beiden Längsachsen A und A' schließen nun miteinander einen spitzen Winkel ein.

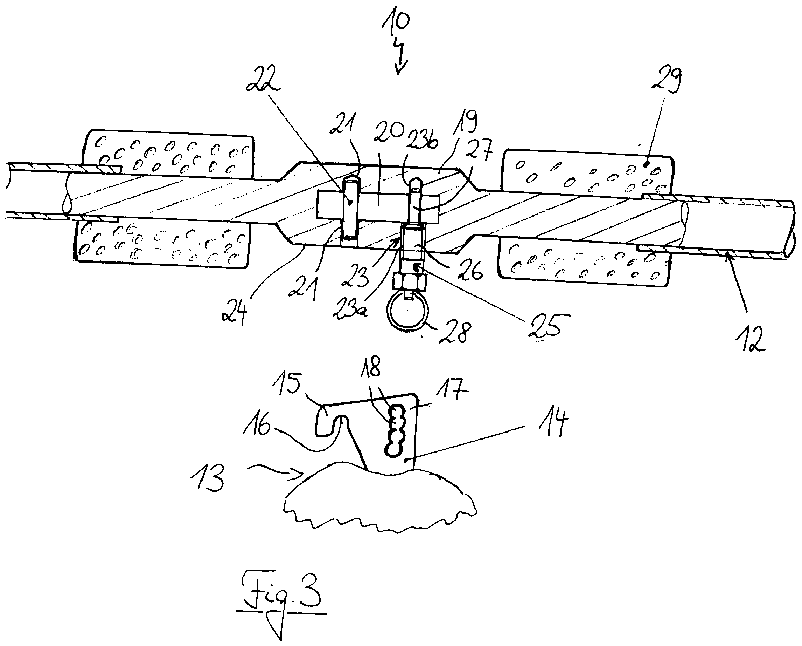

Figur 3 zeigt eine Weiterentwicklung einer erfindungsgemäßen Angel 10 mit einer Angelrute 12 und einer Angelrolle 13, wobei die Angelrolle 13 der besseren Übersicht halber in einer von der Angelrute demontierten Position gezeigt ist. Die Angelrolle 13 weist einen Fuß 14 auf, welcher zur Befestigung der Angelrolle 13 an der Angelrute 12 dient. Der Fuß 14 ist als flache Platte ausgebildet und weist an einem Ende ein hakenförmiges Element 15 auf. Das hakenförmige Element 15 weist an seiner Unterseite einen halbkreisförmigen Bereich 16 auf. Das hakenförmige Element 15 geht aus dem Hauptabschnitt des Fußes 14, nämlich dem Befestigungsbereich 17 hervor. Im Befestigungsbereich 17 sind vier übereinander liegende Aussparungen 18 angeordnet, welche nicht vollständig voneinander getrennt, sondern ineinander übergehend in dem Befestigungsbereich 17 eingebracht sind.

In dem Bereich der Angelrute 2, in welchem der Fuß 4 angeordnet wird, ist die Angelrute 2 verdickt ausgebildet. In diesem verdickt ausgebildeten Bereich 19 der Angelrute 2 ist in die Angelrute eine in Längsrichtung der Angelrute 2 angeordnete rechteckige Aussparung 20 eingebracht. Die Aussparung 20 dient der Aufnahme des Fußes 4. Ferner ist im verdickten Bereich 19 der Angelrute 2 eine um 90° zur Aussparung 20 versetzt angeordnete, ebenfalls rechteckig ausgebildete Aussparung 21 eingebracht. Diese Aussparung 21 ragt beidseitig über die Aussparung 20 hinaus (es sind also exakt gesagt zwei gegenüberliegende Aussparungen). Im Inneren der Aussparung 21 befindet sich ein zylinderförmiger Stift 22, welcher in der Aussparung 21 fixiert ist.

Parallel zur Aussparung 21 ist eine weitere Aussparung 23 im verdickten Bereich 19 der Angelrute 2 eingebracht. Die Aussparung 23 erstreckt sich von einem Rand 24 des verdickten Bereichs 19 zunächst bis zur Aussparung 20 des verdickten Bereichs 19. Die Aussparung 23 bildet also einen durchgehenden Kanal von der Oberfläche des verdickten Bereichs 19 der Angelrute 2 bis zur Aussparung 20 im Inneren des verdickten Bereichs 19. Die Aussparung 23 findet ihre Fortsetzung auf der gegenüberliegenden Seite der Aussparung 20, wobei die Aussparung 23 an dieser Stelle 23b schmäler ausgebildet ist und auch nicht bis zur Oberfläche des verdickten Bereichs 19 führt (Sackbohrung). Der genannte schmälere Bereich 23b der Aussparung 23 ist fluchtend zum breiteren Abschnitt 23a der Aussparung 23 angeordnet. D.h., dass die Längsachsen der Abschnitte 23a und 23b der Aussparung 23 zusammenfallen. In der Aussparung 23 befindet sich ein Federstift 25 mit einem breiteren Kopfabschnitt 26 und einem schmäleren Halsabschnitt 27. Der breitere Abschnitt 26 des Federstifts 25 ist an die Abmessung und Kontur des breiteren Bereichs 23a der Aussparung 23 angepasst. Der schmälere Abschnitt 27 des Federstifts 25 ist an den schmäleren Bereich 23b der Aussparung 23 angepasst. Der Federstift 25 weist einen Betätigungsring 28 auf, mit dem der Federstift 25 soweit aus der Aussparung 23 gezogen werden kann, dass der schmälere Abschnitt 27 des Federstifts 25 die Aussparung 20 komplett freilegt.
Zur Befestigung des Fußes 4 wird der Federstift 25 zunächst derart weit aus der Aussparung 20 gezogen, dass der Fuß mit seinem Befestigungsbereich 17 durch die Aussparung 20 geführt werden kann. Vorher wird das hakenförmige Element 15 des Fußes 14 derart positioniert, dass der halbkreisförmige Bereich 16 den Stift 22 umgreift. Je nach gewünschter Stellung der Angelrolle 13 wird der schmälere Abschnitt 27 des Federstifts 25 durch eine der vier übereinander angeordneten Aussparungen 18 im Fuß 14 hindurchgeführt, wodurch der Fuß 14 fixiert wird.
Zum Ändern der Winkellage zwischen der Längsachse der Angelrolle zur Längsachse der Angelrute muss lediglich der Federstift 25 aus der Aussparung 20 gezogen werden. Der Stift 22 dient dann als Schwenkachse für den Fuß 4. Die Angelrolle 3 kann dann in die gewünschte Position verschwenkt werden. Sobald diese Position erreicht ist, wird der Federstift losgelassen und rastet in eine der gewünschten Aussparungen 18 im Fuß 14 ein.

Die Angelrute 12 ist zum besseren Greifen teilweise von einer Korkummantelung 29 umgeben.

## Patentansprüche

1. Angel mit einer Angelrute (2, 12) und einer Angelrolle (3, 13) mit einem Fuß (4, 14), der zur Befestigung der Angelrolle an der Angelrute dient, wobei sowohl der Fuß (4, 14) der Angelrolle (3, 13) als auch die Angelrute (2, 12) jeweils mindestens eine Aussparung (18, 23) zur gemeinsamen Aufnahme mindestens eines lösbaren Befestigungsmittels (6, 25) zur Fixierung der Angelrolle an der Angelrute aufweisen, **dadurch gekennzeichnet, dass** das mindestens eine Befestigungsmittel ein Federstift ist und wobei eine in Längsrichtung der Angelrute angeordnete Befestigungsplatte (17) des Fußes mehrere, übereinander angeordnete Aussparungen und/oder Zahnbohrungen und/oder Wellenbohrungen auf weist.

2. Angel nach Anspruch 1, **dadurch gekennzeichnet, dass** die Winkellage (a) der Längsachse (A) der Angelrolle (3, 13) und deren Wickelspule zur Längsrichtung (Längsachse A') der Angelrute (2, 12) veränderbar ist, wobei diese beiden Längsachsen (A, A') in der gleichen Ebene verlaufen, wobei das mindestens eine lösbare Befestigungsmittel (6, 25) zur Fixierung der gewünschten Winkellage dient.

3. Angel nach einem der vorhergehenden Ansprüche, **dadurch gekennzeichnet, dass** der Fuß (4, 14) der Angelrolle (3, 13) um eine an der Angelrute (2, 12) angeordnete Achse (22) schwenkbar angelenkt ist, die senkrecht zur Längsrichtung des Fußes (bzw. der Angelrute) verläuft und ein Verschwenken der Angelrolle in Richtung zur Angelrute hin oder davon weg erlaubt.

4. Angel nach einem der vorhergehenden Ansprüche, **dadurch gekennzeichnet, dass** die Angelrute eine weitere, vorzugsweise durchgehende Aussparung (20) zur Durchführung von Teilen des Fußes (4, 14), insbesondere der Befestigungsplatte (17) des Fußes aufweist, die vorzugsweise um 90° versetzt zur Aussparung (23) zur Aufnahme des lösbaren Befestigungsmittels (6, 25) angeordnet ist.

5. Angel nach einem der vorhergehenden Ansprüche, **dadurch gekennzeichnet, dass** die Angelrute (2, 12) im Bereich (19) der Aussparungen (20, 21, 23) verstärkt, insbesondere verdickt ausgebildet ist.

## Claims

1. A fishing rod assembly comprising a fishing rod (2, 12) and a fishing reel (3, 13) having a foot (4, 14) which serves to fasten the fishing reel to the fishing rod, both the foot (4, 14) of the fishing reel (3, 13) and the fishing rod (2, 12) each having at least one recess (18, 23) for jointly receiving at least one detachable fastening means (6, 25) for fixing the fishing reel to the fishing rod, **characterized in that** the at least one fastening means is a spring pin and wherein a fastening plate (17) of the foot arranged in the longitudinal direction of the fishing rod comprises multiple recesses and/or tooth drillings and/or shaft drillings arranged one above the other.

2. The fishing rod assembly as set forth in claim 1, **characterized in that** the angular position (a) of the longitudinal axis (A) of the fishing reel (3, 13) and the winding spool thereof is variable relative to the longitudinal direction (longitudinal axis A') of the fishing rod (2, 12), said two longitudinal axes (A, A') being oriented in the same plane, the at least one detachable fastening means (6, 25) serving to fix the desired angular position.

3. The fishing rod assembly as set forth in any of the preceding claims, **characterized in that** said foot (4, 14) of the fishing reel (3, 13) is hinged to pivot about a shaft (22) arranged at the fishing rod (2, 12) and oriented perpendicular to the longitudinal direction of the foot (or fishing rod) to allow the fishing reel to pivot to and from the fishing rod.

4. The fishing rod assembly as set forth in any of the preceding claims, **characterized in that** said fishing rod comprises a further, preferably full-length recess (20) for channeling parts of the foot (4, 14), particularly of the fastening plate (17) of the foot, the further recess arranged preferably offset by 90° from the recess (23) for receiving the detachable fastening means (6, 25).

5. The fishing rod assembly as set forth in any of the preceding claims, **characterized in that** said fishing rod (2, 12) is reinforced, in particular thicker, in the area (19) of the recesses (20, 21, 23).

## Revendications

1. Canne à pêche comprenant une gaule (2, 12) et un moulinet de pêche (3, 13) ayant un pied (4, 14) qui sert à attacher le moulinet de pêche à la gaule, le pied (4, 14) du moulinet de pêche (3, 13) ainsi que la gaule (2, 12) ayant chacun au moins un évidement (18, 23) pour la réception jointe d'au moins un moyen d'attachement (6, 25) détachable destiné à fixer le moulinet de pêche à la gaule, **caractérisée en ce que** l'au moins un moyen d'attachement est une goupille à ressort et dans lequel une plaque d'attachement (17) du pied disposée dans la direction longitudinale de la gaule comprend plusieurs évidements et/ou perçages dentés et/ou perçages d'arbre disposés de manière superposée.

2. Canne à pêche selon la revendication 1, **caractérisée en ce que** la position angulaire (a) de l'axe longitudinal (A) du moulinet de pêche (3, 13) et de la bobine d'enroulement de celui-ci est variable par rapport à la direction longitudinale (axe longitudinal A') de la gaule (2, 12), les deux axes longitudinaux (A, A') s'étendant dans le même plan, l'au moins un moyen d'attachement (6, 25) détachable servant à fixer la position angulaire désirée.

3. Canne à pêche selon l'une quelconque des revendications précédentes, **caractérisée en ce que** le pied (4, 14) du moulinet de pêche (3, 13) est articulé de manière pivotable atour d'un axe (22) disposé sur la gaule (2, 12) et s'étendant perpendiculaire à la direction longitudinale du pied (ou de la gaule) et permettant au moulinet de pêche de pivoter vers la gaule et de s'en éloigner.

4. Canne à pêche selon l'une quelconque des revendications précédentes, **caractérisée en ce que** la gaule comprend un autre évidement, préférablement un évidement continu (20), destiné à faire traverser des parties du pied (4, 14), notamment la plaque d'attachement (17) du pied, l'autre évidement étant décalé de préférence à 90° par rapport à l'évidement (23) destiné à recevoir le moyen d'attachement (6, 25) détachable.

5. Canne à pêche selon l'une quelconque des revendications précédentes, **caractérisée en ce que** la gaule (2, 12) est renforcée, notamment plus épaisse, dans la zone (19) des évidements (20, 21, 23).
